# EUROPÄISCHE PATENTANMELDUNG

(11) **EP 0 958 763 A1**
(43) Veröffentlichungstag der Anmeldung: **24.11.1999**
(21) Anmeldenummer: 98810449.3
(22) Anmeldetag: 15.05.1998
(51) Int. Cl.: A47C 3/30, F16F 9/02, A47B 9/10

(54) **Stütze**

(71) Anmelder: Cabex AG, 9490 Vaduz (LI)
(72) Erfinder: Del Conte, Peter, CH-8356 Ettenhausen (CH)
(74) Vertreter: Kulhavy, Sava, Dipl.-Ing.

(57) **Zusammenfassung**

Die Stütze umfasst eine Büchse (20) zur Führung einer Vorrichtung (10) zur Verstellung der Länge der Stütze, wobei die Führungsbüchse (20) in einem Führungsrohr (1) eingesetzt ist. Die Führungsbüchse (20) weist ein Rohrstück (21) auf, dessen Längsachse auf der Hauptachse A der Stütze liegt. Von der Aussenfläche (23) des Rohrstückes (21) stehen Aussenrippen (22) ab, welche sich bis zur Innenfläche (24) des Führungsrohres (1) erstrecken. Von der Innenseite (43) des Rohrstückes (21) stehen Innenrippen (42) ab, welche sich von der Innenseite (43) dieses Rohrstückes (21) gegen die Hauptachse A der Stütze hin erstrecken. Der Stirnbereich (40) der Innenrippe (42) weist eine gekrümmte Stirnfläche (39) auf, deren Krümmungsradius dem Krümmungsradius der Aussenwand (14) der Verstellvorrichtung (10) entspricht. Der genannte Stirnbereich (40) umfasst ferner zumindest eine Lippe (50,57;60), welche so ausgebildet ist, dass die Verstellvorrichtung (10) durch diese Lippe ebenfalls gestüzt werden kann. Eine solche Stütze lässt sich (nach-)bearbeitungsfrei und trotzdem spielfrei herstellen, was unter anderem die Herstellungskosten der Stütze wesentlich senkt.

## Beschreibung

Die vorliegende Erfindung betrifft eine Stütze, insbesondere für Stühle, Tische und dgl., mit einer Vorrichtung zur Verstellung der Länge der Stütze, und mit einer Büchse zur Führung der Verstellvorrichtung, wobei diese Büchse in einem Führungsrohr eingesetzt ist.

Es ist bekannt, dass die Aussenseite der Verstellvorrichtungen, welche in den Stützen der genannten Gattung benützt werden, zylinderförmig ist. Es ist auch bekannt, dass ausserordentlich grosse seitliche Kräfte, verursacht beispielsweise durch eine starke einseitige Belastung der Sitzfläche eines Stuhles, auf die Verstellvorrichtung einwirken können. Die Benützer des Stuhles, eines Tisches mit einer solchen Stütze oder dgl. verlangen, dass die Verstellvorrichtung im Führungsrohr auch bei extrem grossen seitlichen Belastungen wackelfrei sitzt und dass sie trotzdem längsbeweglich bleibt. Dieser Forderung kommt man in der Weise nach, dass man den Sitz der Verstellvorrichtung im Führungsrohr mit einer extremen Präzision herstellt. Die diesbezüglichen Herstellungskosten sind dann auch dementsprechend extrem hoch.

Die Aufgabe der vorliegenden Erfindung ist, den genannten Nachteil sowie noch weitere Nachteile des Standes der Technik zu beseitigen.

Diese Aufgabe wird bei der Stütze der eingangs genannten Gattung erfindungsgemäss so gelöst, wie dies im kennzeichnenden Teil des Patentanspruchs 1 definiert ist.

Nachstehend werden Ausführungsformen der vorliegenden Erfindung anhand der beiliegenden Zeichnungen näher erläutert. Es zeigt:
Fig. 1 in einem vertikalen Längsschnitt die vorliegende Stütze,
Fig. 2 in einem vertikalen Längsschnitt ein Führungsrohr der Stütze aus Fig. 1, in welchem eine Führungsbüchse eingesetzt ist,
Fig. 3 in einer Seitenansicht eine Führungsbüchse, welche einen der Bestandteile des Führungsrohres aus Fig. 2 darstellt,
Fig. 4 einen horizontalen Schnitt durch die Führungsbüchse gemäss Fig. 3,
Fig. 5 in einem vertikalen Schnitt eine zweite Ausführungsmöglichkeit der Führungsbüchse,
Fig. 6 in einem horizontalen Schnitt die Büchse aus Fig. 5,
Fig. 7 in eine plane Ebene entwickelt die Innenseite jener Ausführung der Führungsbüchse, welche in Fig. 2 dargestellt ist,
Fig. 8 in eine plane Ebene entwickelt die Innenseite jener Ausführung der Führungsbüchse, welche in Fig. 5 bzw. 6 dargestellt ist,
Fig. 9 in eine plane Ebene entwickelt die Innenseite einer dritten Ausführung der Führungsbüchse,
Fig. 10 bis 13 vier weitere Ausführungen des Profils der Stützrippen an der Innenseite der Führungsbüchse.

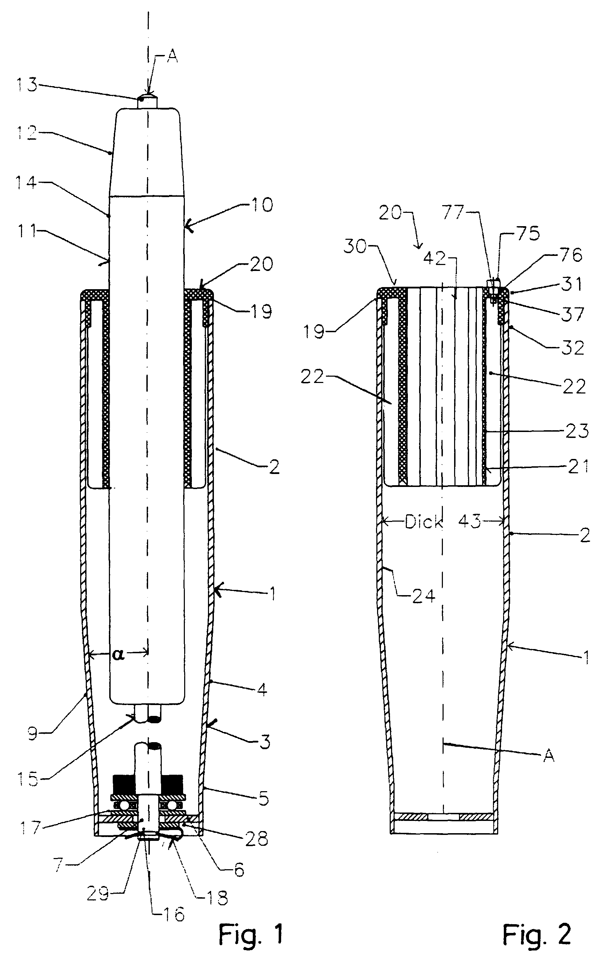

Fig. 1 zeigt die vorliegende Stütze in einem vertikalen Längsschnitt. Diese Stütze kann beispielsweise zum Verstellen der Höhe einer Sitzfläche, einer Tischplatte usw. verwendet werden. Die untere Partie einer solchen Stütze kann in die Nabe eines Fussgestells (nicht dargestellt) eingesteckt sein. Die obere Endpartie der Stütze trägt beispielsweise die Sitzfläche eines Stuhls, die Platte eines Tisches oder dgl.

Die vorliegende Stütze umfasst unter anderem auch ein Führungsrohr 1, dessen Längsachse mit der Längs- bzw. Hauptachse A der Stütze zusammenfällt. Der Hauptabschnitt 2 des Führungsrohres 1, welcher sich im oberen Bereich des Führungsrohres 1 befindet, ist praktisch zylinderförmig. Im unteren Bereich weist das Führungsrohr 1 einen sich verjüngenden Abschnitt 3 auf, welcher sich an den Hauptabschnitt 2 anschliesst und welcher mit dem Hauptabschnitt 2 einstückig ist.

Der untere Rohrabschnitt 3 setzt sich zusammen aus einem konusförmigen Teil 4 und einem zylinderförmigen Teil 5. Ein Winkel Alpha, welcher die Seitenlinie S des konusförmigen Rohrteils 4 mit der Hauptachse A schliesst, liegt zwischen 2 bis 15 Grad, sodass der Konusteil 4 einen steil verlaufenden Mantel bzw. eine steil verlaufende Seitenwand aufweist. Dieser Konusteil 4 kann in das vorstehend erwähnte Fussgestell eingesetzt sein. Das breitere Ende des konusförmigen Rohrteils 4 schliesst sich an den Hauptabschnitt 2 des Führungsrohres 1 an. Der zylinderförmige Rohrteil 5 des unteren Rohrabschnittes 3 schliesst sich an das den kleineren Durchmesser aufweisende Ende des konusförmigen Rohrteils 4 an. Der Durchmesser dieses unteren Rohrteiles 5 ist kleiner als der Durchmesser des Hauptabschnittes 2 des Führungsrohres 1. Im Inneren des zylinderförmigen Rohrteils 5 ist eine Bodenplatte 6 befestigt, welche zur Hauptachse A der Stütze praktisch senkrecht steht. In der Mitte dieser Boden-platte 6 ist eine Oeffnung 7 ausgeführt.

Die vorliegenden Stütze umfasst ferner eine Vorrichtung 10 zur Verstellung der Länge der Stütze, wobei diese Vorrichtung 10 als eine Fluidfeder ausgeführt ist. Es kann sich beispielsweise um eine Gasfeder oder um eine hydraulische Feder handeln, wobei solche Feder allgemein bekannt sind. Die Länge einer solchen Verstellvorrichtung 10 ist in einer bekannten Weise veränderbar und arretierbar. Die Verstellvorrichtung 10 weist ein zylinderförmiges Gehäuse 11 auf, in welchem sich ein Kolben (nicht dargestellt) befindet. Dieses Gehäuse bzw. dieser Zylinder 11 ist in den Hauptabschnitt 2 des Führungsrohres 1 von oben her eingesetzt, und zwar derart, dass die Längsachse dieser Vorrichtung 10 auf der Längsachse A der Stütze liegt. Der obere Teil des Federgehäuses 11 ragt oben aus dem Führungsrohr 1 und an diesen Oberteil schliesst sich ein Konus 12 an, auf welchen die Sitzfläche eines Stuhles, die Platte eines Tisches oder dgl. aufgesetzt sein kann. Zur Betätigung der Verstellvorrichtung 10 ragt ein an sich bekannter Stössel 13 axial aus der oberen Stirnfläche der Konusendpartie 12 der Verstellvorrichtung 10 heraus.

Aus der unteren Stirnfläche des Federgehäuses 11 ragt eine Kolbenstange 15 der Verstellvorrichtung 10 heraus, wobei jenes Ende der Kolbenstange 15, welches im Inneren des Zylinders 11 liegt, an den vorstehend erwähnten Kolben angeschlossen ist. Die aus dem Gehäuse 11 ragende Endpartie der Kolbenstange 15 ist der Bodenplatte 6 des Führungsrohres 1 zugeordnet. Hierzu ist diese Endpartie der Kolbenstange 15 mit einem axial abstehenden Zapfen 16 versehen, dessen Durchmesser kleiner ist als der Durchmesser der Kolbenstange 15. Der zapfen 16 geht durch eine Axial-Kugel-Lager 17 hindurch, welches auf der Bodenplatte 6 ruht. Die Achse der mittigen Oeffnung im Axiallager 17 liegt ebenfalls auf der Hauptachse A der Stütze.

Der Zapfen 16 ist so lang ausgeführt, dass seine freie Endpartie aus der Oeffnung 7 der Bodenplatte 6 unten herausragt. In dieser freien Endpartie des Zapfens 16 ist eine umlaufende Nut 29 ausgeführt. Die genannte Endpartie ist mit einem Sicherungselement 18 versehen. Dieses Sicherungselement 18 ist eine im wesentlichen U-förmige Feder. In einem der Schenkel bzw. im oberen Schenkel 28 dieser Feder 18 ist ein im wesentlichen U-förmiger Einschnitt (nicht dargestellt) ausgeführt. Der Abstand zwischen den Innenkanten dieses Einschnittes entspricht dem Durchmesser des Bodens der Nut 29 im Zapfen 16. Dieser U-Schenkel 28 der Feder 18 ist in der Nut 29 des Zapfens 16 eingesteckt. Das Sicherungselement 18 kann jedoch auch als ein Splint ausgeführt sein, welcher durch eine Oeffnung in der freien Endpartie des Zapfens 16 hindurchgesteckt ist. Das Führungsrohr 1 und das Gehäuse 11 der Verstellvorrichtung 10 sind zweckmässigerweise aus Stahl.

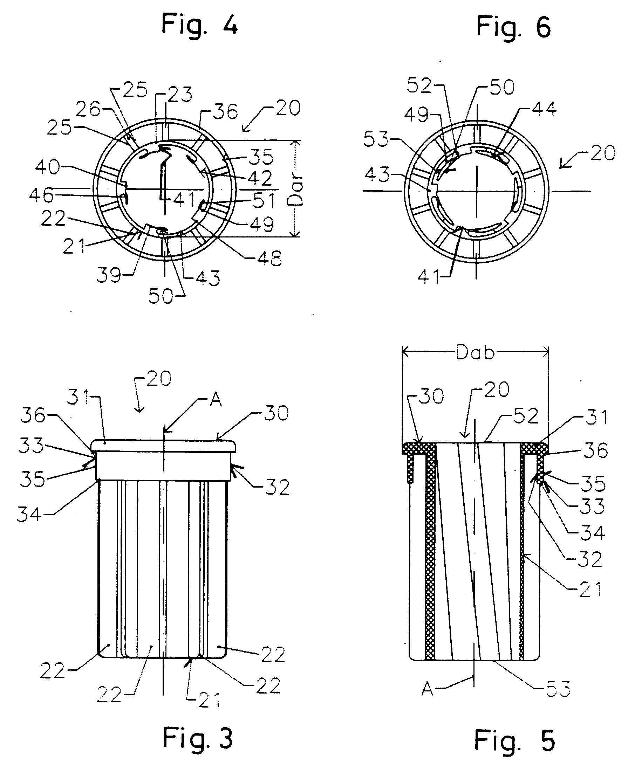

Von der freien bzw. oberen Mündung 19 des Hauptabschnittes 2 des Führungsrohres 1 her ist eine Führungsbüchse 20 für die Aufnahme der Verstellvorrichtung 10 im Führunsgrohr 1 eingesetzt (Fig. 1 bis 5). zweckmässigerweise ist diese Führungsbüchse 20 aus einem weicheren Material als das Gehäuse 11 der Verstellvorrichtung 10, wobei dieses weichere Material vorteilhaft ein Kunststoff sein kann. Die Führungsbüchse 20 weist einen zylindeförmigen bzw. rohrstückförmigen Grundkörper 21 (Fig. 2 und 3) auf, dessen Längsachse auf der Hauptachse A der Stütze liegt. Die Länge des Rohrstückes 21 ist kleiner als die Länge des Hauptabschnittes 2 des Führungsrohres 1. Der äussere Durchmesser Dar (Fig. 4) des Rohrstückes 21 ist kleiner als der innere Durchmesser Dih (Fig. 2) des Hauptabschnittes 2 des Führungsrohres 1.

Von der Aussenfläche 23 des Rohrstückes 21 stehen Aussenrippen 22 ab, welche sich einerseits in der Axialrichtung und andererseits in der Radialrichtung der Stütze erstrecken. Diese Aussenrippen 22 sind in der Umfangsrichtung entlang der Aussenfläche 23 des Rohrstückes 21 in Abständen voneinander verteilt. Im dargestellten Fall weist die Führungsbüchse 20 zehn Aussenrippen 22, welche in gleich grossen Abständen voneinander angeordnet sind. Die mit der Axialrichtung übereinstimmende Länge der Rippe 22 ist mit der Länge des Rohrstückes 21 vergleichbar, sodass die Rippen 22 sich praktisch entlang dem gesamten Rohrstück 21 erstrecken. Die mit der Radialrichtung übereinstimmende Länge der Rippen 22 ist so gewählt, dass sie den Abstand zwischen der Aussenfläche 23 des Rohrstückes 21 und der Innenfläche 24 des Hauptabschnittes 2 des Führungsrohres 1 überbrücken und dass die Führungsbüchse 20 im Führungsrohr 1 spielfrei festsitzt, indem die Führungsbüchse 20 mit Pressitz in das Führungsrohr 1 eingebaut ist.

Die Form und die Abmessungen des Querschnittes der jeweiligen Aussenrippe 22 werden in Abhängigkeit vom Material der Führungsbüchse 20 gewählt, und zwar derart, dass die Achse der Führungsbüchse 20 auch dann aus der Uebereinstimmung mit der Hauptachse A der Stütze nicht austritt, wenn der maximale betriebsmässige seitliche Druck auf das obere Ende 12 der Feder 10 einwirkt. Der Querschnitt der Rippen 22 ist im dargestellten Fall rechteckförmig. Im dargestellten Fall erstrecken sich die längeren Querschnittseiten 25 der Rippe 22 zwischen der Aussenfläche 23 des Rohrstückes 21 und der Innenfläche 24 des Führungsrohres 1. Für grosse Belastungen können die Rippen 22 jedoch auch so orientiert sein, dass sich die kürzeren Querschnittseiten 26 der Rippe 22 mit dem rechteckförmigen Querschnitt zwischen dem Rohrstück 21 und dem Führungsrohr 1 erstrecken.

Die Führungsbüchse 20 weist ferner einen Ringbund 30 auf, welcher sich an das obere Ende des Rohrstückes 21 anschliesst und welcher mit dem Rohrstück 21 einstückig ist. Der Querschnitt des Ringbundes 30 ist im wesentlichen L-förmig, sodass dieser einen ersten bzw. horizontalen Schenkel 31 und einen zweiten bzw. vertikalen Schenkel 32 aufweist (Fig. 5). Diese L-Schenkel 31 und 32 stehen praktisch rechtwinklig zueinander. Die freie Endpartie des horizontalen L-Schenkels 31 ist an den oberen Rand des Rohrstückes 21 angeschlossen und sie ist mit dem Rohrstück 21 einstückig. Die obere Endpartie des vertikalen Schenkels 32 des Ringbundes 30 ist an das gegenüberliegende Ende des horizontalen Schenkels 31 angeschlossen und mit diesem einstückig. Der äussere Durchmesser Dab des vertikalen Ringbundschenkels 32 ist etwas grösser als der innere Durchmesser Dih des Hauptabschnittes 2 des Führungsrohres 1.

Von der Aussenseite des Vertikalschenkels 32 her ist eine umlaufende Vertiefung 33 mit einem im wesentlichen rechteckförmigen Querschnitt im Vertikalschenkel 32 ausgeführt. Diese Vertiefung 33 schliesst sich einerends an die untere Stirnfläche 34 der freien Endpartie des vertikalen Ringbundschenkels 32 an. Folglich weist die Vertiefung 33 eine praktisch parallel zur Hauptachse A verlaufende zylinderförmige Wand 35 auf, welche eine der längeren Seiten der rechteckförmigen Vertiefung 33 bildet und welche den Boden dieser Vertiefung 33 darstellt. Ferner weist diese Vertiefung 33 eine von diesem Boden 35 abstehende Seitenfläche 36 auf, welche der kürzeren Seite des rechteckförmigen Querschnitts entspricht. Diese horizontal verlaufende Seitenfläche 36 hat die Form eines flachen Ringes und sie bildet einen Anschlag, welcher auf der Stirnkante 19 des Hauptabschnittes 2 des Führungsrohres 1 aufliegt, wenn die Führungsbüchse 20 in das Führungsrohr 1 eingesetzt ist. In diesem Fall liegt der zylinderförmige Boden 35 der Vertiefung 33 an der Innenseite 24 des Führungsrohres 1 auf.

Zwischen der Aussenseite 23 des Rohrstückes 21 und der Innenseite des Vertikalschenkels 32 (Fig. 2) gibt es einen Freiraum, welcher oben durch den darüber liegenden Abschnitt des horizontal verlaufenden L-Schenkels 31 des Ringbundes 30 überbrückt ist. In diesem Brückenabschnitt des Horizontalschenkels 31 ist eine Bohrung 37 ausgeführt, deren Längsachse parallel zur Hauptachse A der Stütze verläuft. In der Bohrung 37 ist ein Anschlagpuffer 75 eingesetzt. Dieser hat einen Kopf 76, an dessen Unterseite sich ein Bolzen 77 anschliesst. Der Bolzen 77 liegt in der Bohrung 37. Der Puffer 75 ist aus einem elastischen Material und sein Kopf 76 soll einen harten Anschlag vermeiden, wenn die Unterseite, beispielsweise der Sitzfläche eines Stuhls, ganz nach unten fährt. In Winkelabständen von 120 Grad sind drei solche Bohrungen 37 im Horizontalschenkel 31 des Ringbundes 30 ausgeführt, sodass drei Anschlagpuffer 75 entlang dem Ringbund 30 angeordnet sein können.

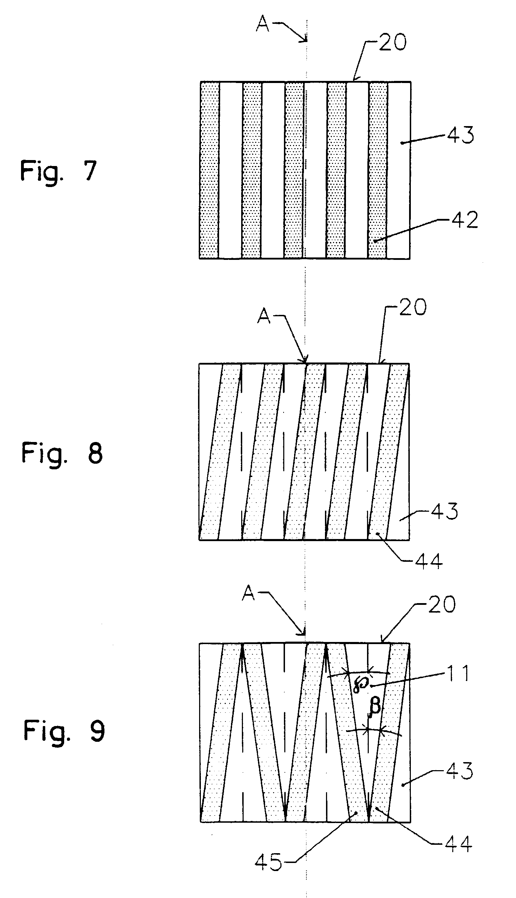

Von der Innenseite des Rohrstückes 21 stehen Innenrippen 42 ab, welche sich einerseits von der Innenseite 43 des Rohrstückes 21 in der Radialrichtung gegen die Hauptachse A der Stütze hin und andererseits entlang der Rohrstückinnenseite 43 in der Axialrichtung erstrecken. Die in Fig. 2 und 4 dargestellten Innenrippen 42 verlaufen parallel zur Hauptachse A der Stütze bzw. parallel zu den Mantellinien des Rohrstückes 21. Fig. 7 zeigt die Innenseite 43 der Führungsbüchse 20 gemäss Fig. 2 und 4, wenn diese Innenseite 43 in eine plane Ebene entwickelt ist. Die Innenrippen 42 verlaufen parallel sowohl zueinander als auch zur Hauptachse A der Stütze. Im dargestellten Fall weist die Führungsbüchse 20 fünf Innenrippen 42 auf.

Die mit der Axialrichtung der Büchse 20 übereinstimmende Länge der Rippen 42 ist mit der Länge des Rohrstückes 21 vergleichbar, sodass diese Rippen 42 sich praktisch entlang dem gesamten Rohrstück 21 erstrecken. Die mit der Radialrichtung übereinstimmende Länge der Rippen 42 ist so gewählt, dass sie den Abstand bzw. den Zwischenraum zwischen der Innenfläche 43 des Rohrstückes 21 und der Aussenfläche 14 der Federvorrichtung 10 überbrücken. Die Innenrippe 42 (Fig. 4) weist einen Grundkörper 41 auf, der einen im wesentlichen viereckförmigen Querschnitt hat. Der Grundkörper 41 mit einem solchen Querschnitt ist im wesentlichen nicht nachgiebig. Eine der Seiten bzw. Flächen des Grundkörpers 41 mit dem genannten Querschnitt, nämlich die Grundfläche desselben, schliesst sich an die Innenseite 43 des Rohrstückes 21 an, sodass die Innenrippe 42 über diese Fläche mit dem Rohrstück 21 einstückig ist. Der zur genannten Grundfläche gegenüberliegende Stirnbereich 40 des Rippengrundkörpers 41 ist so ausgebildet, dass die Verstellvorrichtung 10 in der Führungsbüchse 20 spielfrei bzw. wackelfrei festsitzt.

Um den genannten Zweck zu erreichen, weist der Stirnbereich 40 der Rippe 42 eine Stirnfläche 39 auf, welche hohl bzw. konkav ausgebildet ist. Die Krümmung dieser Stirnfläche 39 liegt in einer Ebene, welche zur Hauptachse A senkrecht steht. Der Radius dieser Krümmung entspricht bzw. gleicht dem Radius der Aussenfläche 14 der Verstellvorrichtung 10. Solche Stirnflächen 39 der Innenrippen 42 geben der Verstellvorrichtung 10 den wesentlichen Halt im Führungsrohr 1. Um jedoch allfällige und vor allem herstellungstechnisch bedingte Abweichungen der Abmessungen der Bestandteile der vorliegenden Stütze von den vorgegebenen Abmessungen auszugleichen, kann der Stirnbereich 40 der Innenrippen 42 wie nachstehend beschrieben ausgebildet sein.

Der Rippengrundkörper 41 weist Eckpartien auf, von welchen je eine sich dort befindet, wo sich der Stirnbereich 40 der Innenrippe 42 mit der jeweiligen Seitenfläche 48 bzw. 49 des Grundkörpers 41 dieser Innenrippe 42 trifft. Zumindest von einer der Eckpartien des Rippengrundkörpers 41 steht eine Lippe 50 ab. In der Axialrichtung erstreckt sich diese Lippe 50 entlang dem Grundkörper 41 der Innenrippe 42. In der Umfangsrichtung verläuft die Lippe 50 hinsichtlich des Rohrstückes 21 praktisch bzw. beinahe tangential. Bei allen Innenrippen 42 einer der Ausführungsformen dieser Erfindung steht die Lippe 50 von derselben Eckpartie der Innenrippe 42 ab. Der senkrecht zur Hauptachse A liegende Querschnitt der Lippe 50 ist im wesentlichen bogenförmig. Der Hohlraum dieses Bogens ist von der Hauptachse A abgewandt, sodass zumindest die der Hauptachse A zugewandte Oberfläche 51 der Lippe 50 konvex verläuft. Diese Oberfläche 51 der Lippe 50 liegt zur Hauptachse A näher als die konkave Stirnfläche 39 des Rippengrundkörpers 41.

Im in Fig. 4 dargestellten Fall steht die Lippe 50 jeweils von jener Eckpartie der Innenrippen 42 ab, welche sich gegenüber der Mitte der Rippen 42 im Gegenuhrzeigersinn befindet. Ausserdem erstreckt sich diese Lippe 50 praktisch parallel zur Hauptachse A der Stütze.

Die in Fig. 5 und 6 abgebildete Führungsbüchse 20 weist Innenrippen 44 auf, welche zur Hauptachse A der Stütze bzw. zu den Mantellinien des Rohrstückes 21 schräg verlaufen. Fig. 8 zeigt die Innenseite 43 der Führungsbüchse 20 gemäss Fig. 5 und 6, wenn diese Innenseite 43 in eine plane Ebene entwickelt ist. Die Innenrippen 44 dieser Führungsbüchse 20 erstrecken sich schräg verlaufend entlang der ganzen Höhe des Rohrstückes 21. Der Grundkörper 41 der jeweiligen Innenrippe 42 samt der sich an diesen anschliessenden Lippe 50 hat eine obere Stirnfläche 52 und eine untere Stirnfläche 53, wobei die jeweilige Stirnfläche 52 bzw. 53 sich in einem der Endbereiche des Rohrstückes 21 befindet. Wegen dem schrägen Verlauf der Innenrippen 42 und somit auch der sich an die Innenrippen 42 anschliessenden Lippen 50 sind die Konturen der genannten Stirnflächen 52 und 53 in der Umfangsrichtung des Rohrstückes 21 zueinander versetzt (Fig. 6).

Wie aus Fig. 9 ersichtlich ist kann es an der Innenseite 43 der Führungsbüchse 20 sogar zwei Sätze von parallel zueinander verlaufenden Innenrippen 44 und 45 geben. Die Rippen 44 des ersten Satzes entsprechen den im Zusammenhang mit Fig. 8 bereits behandelten Rippen und sie verlaufen gegenüber der Achse A bzw. gegenüber einer der Mantellinien M des Rohrstückes 21 unter einem Winkel Beta, welcher sich von der Hauptachse A nach rechts erstreckt. Die Rippen 45 des zweiten Satzes verlaufen gegenüber der Achse A unter einem Winkel Gamma, welcher sich von der Hauptachse A nach links erstreckt. Diese Winkel Beta und Gamma können gleich gross sein, sie können scharfe Winkel sein und deren Grösse kann im Bereich von 10 Grad liegen. Die jeweils benachbarten Rippen 44 und 45 bilden in dieser Weise die Schenkel des Buchstaben V.

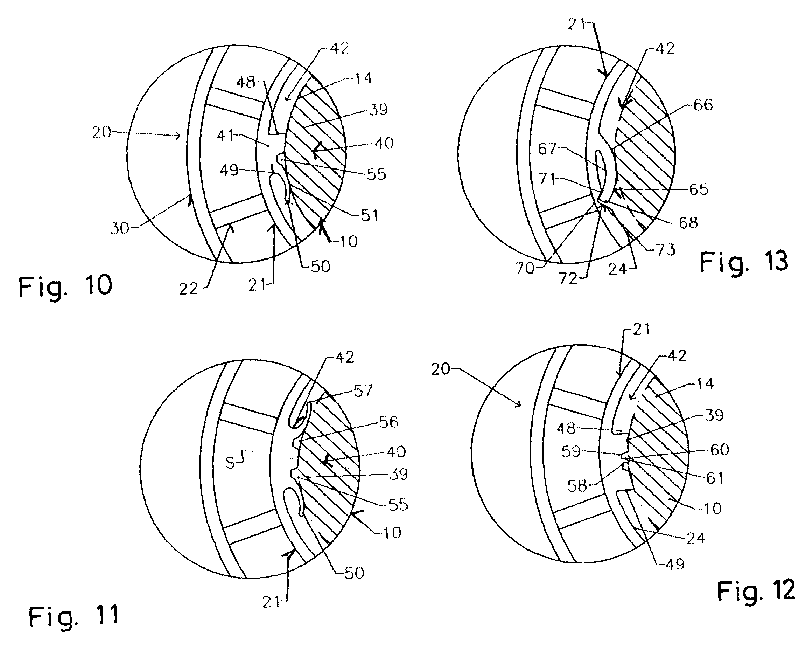

Fig. 10 bis 13 zeigen vergrössert vier weitere Ausführungsmöglichkeiten des Stirnbereiches 40 der Innenrippen 42 an der Führungsbüchse 20. Der Stirnbereich 40 der Innenrippe 42, welcher in Fig. 10 in einem Horizontalschnitt dargestellt ist, ähnelt sehr jenem Stirnbereich, welcher im Zusammenhang mit Fig. 4 beschrieben worden ist. Zusätzlich zum Stirnbereich aus Fig. 4 weist der Stirnbereich 40 gemäss Fig. 10 eine Rille 55 in der Stirnfläche 39 der Innenrippe 42 auf. Diese Rille 55 befindet sich im mittleren Bereich der Breite des Grundkörpers 41 der Innenrippe 42 und sie öffnet sich gegen die Hauptachse A bzw. gegen die Verstellvorrichtung 10 hin. Zu einer Seite dieser Rille 55 befindet sich die gekrümmte Stirnfläche 39 der Innenrippe 42, an der die Aussenwand 14 der Verstellvorrichtung 10 normalerweise aufliegt. Zu der anderen Seite der Rille 55 befindet sich die ebenfalls bereits beschriebene Lippe 50.

Der Stirnbereich 40 der Innenrippe 42 weist zwei Rillen 55 und 56 auf, welche in der Stirnfläche 39 der Innenrippe 42 ausgeführt sind. Die beiden Rillen 55 und 56 sind praktich gleich ausgebildet, und zwar so, wie dies im Zusammenhang mit der Rille 55 gemäss Fig. 10 dargelegt worden ist. Die Stirnfläche 39, an der die Feder 10 aufliegt, befindet sich zwischen den Rillen 55 und 56. Der Stirnbereich 40 gemäss fig. 11 weist ferner eine zweite Lippe 57 auf, welche hinsichtlich der Stirnfläche 39 der ersten Lippe 50 in Umfangsrichtung gegenüberliegt und welche sich an die Aussenseite der zweiten Rille 56 in der Weise anschliesst, wie dies im Zusammenhang mit der Lippe 50 beim Stirnbereich 40 gemäss Fig. 10 beschrieben worden ist. Der Stirnbereich 40 gemäss Fig. 11 kann hinsichtlich einer Achse S symmetrisch sein, wobei diese Symmetrieachse S durch die Mitte der Breite der Stirnfläche 39 und in Radialrichtung hinsichtlich des Rohrstückes 21 hindurchgeht.

Die in Fig. 12 abgebildete Ausführung der Innenrippe 42 hat einen im wesentlichen rechteckförmigen Querschnitt, wobei sich die Innenrippe 42 in der vorstehend bereits beschriebenen Weise an das Rohrstück 21 anschliesst. Diese Innenrippe 42 weist praktisch plan verlaufende Seitenflächen 48 und 49, welche den Abstand zwischen der Innenfläche 24 des Rohrstückes 21 und der Aussenfläche 14 der Feder 10 überbrücken.

Von der Stirnfläche 39 der Innenrippe 42 her ist eine Vertiefung 58 in der Innenrippe 42 ausgeführt. Diese Vertiefung 58 befindet sich etwa in der Mitte der Breite der Stirnfläche 39 der Innenrippe 42 und sie erstreckt sich entlang der Innenrippe 42. Die Vertiefung 58 hat einen verhältnismässig breiten Boden 59, aus dem eine Lippe 60 emporragt. Diese Lippe 60 hat einen praktisch dreieckförmigen Querschnitt, wobei sie über eine ihrer Seiten an den Boden 59 der Vertiefung 58 angeschlossen und mit diesem einstückig ist. Die Höhe der Lippe 60 ist etwas grösser als die Tiefe der Vertiefung 58, sodass die vom Boden 59 der Vertiefung 58 abgewandte Kante 61 der Lippe 60 aus der Vertiefung 58 ragt, wenn keine Verstellvorrichtung 10 in der Führungsbüchse 20 eingesetzt ist. Im dargestellten Fall ist die Verstellvorrichtung 10 in der Hülse 20 jedoch eingesetzt und deswegen ist die Lippenkante 61 seitlich abgebogen dargestellt.

Die Innenrippe 42 gemäss Fig. 13 ist als eine seitlich biegsame Rippe ausgeführt, welche sich, gleich wie die vorstehend beschriebenen Innenrippen, entlang dem Rohrstück 21 erstreckt. Die vorliegende Innenrippe 42 weist einen Grundkörper 65 auf, welcher einen im wesentlichen rechteckförmigen Querschnitt aufweist. Eine der kürzeren Seiten des genannten Querschnittes schliesst sich an die Innenfläche 24 des Rohrstückes 21 an und sie ist mit diesem einstückig. Die Länge der Steinflächen 66 und 67 und die Länge der vom Rohrstück 21 abgewandten Stirnseite 68 der Innenrippe 42 sind so bemessen, dass diese Innenrippe 42 sich seitlich so weit ablenken lässt, bis die freie und die Stirnfläche 68 umfassende Endpartie der Innenrippe 42 die Innenfläche 24 des Rohrstückes 21 zumindest berührt.

In jenem Gebiet der Innenfläche 24 des Rohrstückes 21, in welchem die freie Endpartie 68 der Rippe 42 auf diese Innenfläche 24 zur Auflage kommen kann, ist eine sich entlang dem Rohrstück 21 erstreckende Vertiefung 70 ausgeführt, in der die Endpartie bzw. der Kamm 68 der Innenrippe 42 Platz finden kann. Die Vertiefung 70 hat einen im wesentlichen V-förmigen Querschnitt, welcher sich aus Flanken 71 und 72 zusammensetzt. Der Winkel, welchen diese Flanken 71 und 72 zwischen sich schliessen, beträgt praktisch 90 Grad. Die Neigung der Flanken 71 und 72 hinsichtlich der Innenfläche 24 des Rohrstückes 21 ist so gewählt, dass der Kamm 68 der Innenrippe 42 in der Vertiefung 70 so Platz finden kann, dass die innere Seitenfläche 67 der Rippe 42 auf der ersten V-Flanke 71 und die Stirnfläche 68 der Rippe 42 auf der zweiten V-Flanke 72 der Vertiefung 70 aufliegen kann.

Die Länge der Stirnfläche 68, d.h. die Breite der Rippe 42, und die Länge der Seitenflächen 66 und 67 der Rippe 42 sind unter der Berücksichtigung der Eigenschaften des zur Herstellung der Führungsbüchse 20 verwendeten Materials so gewählt, dass es einen Spalt 73 zwischen der Stirnfläche 68 der Rippe 42 und der dieser gegenüberliegenden V-Flanke 72 der Vertiefung 70 geben kann, wenn keine seitliche Kraft auf die Feder 10 einwirkt oder wenn die Grösse dieser Kraft im vorgesehenen Rahmen liegt. Bei seitlicher Ueberlastung der Verstellvorrichtung 10 gibt die Innenrippe 42 in der Weise nach, dass der Kamm 68 derselben sich in der Vertiefung 70 bewegt. Dabei gleitet die innere Seitenfläche 67 der Rippe 42 auf der ersten V-Flanke 71 und die Stirnfläche 68 der Rippe 42 bewegt sich gegen die zweiten V-Flanke 72 der Vertiefung 70 hin, bis diese Stirnfläche 68 auf der zweiten Flanke 72 der Vertiefung 70 anschlägt. In diesem Moment erreicht diese Ausführung der Rippe 42 ihre maxiamale Stefigkeit.

Der genannte Spalt 73 zwischen der Stirnfläche 68 der Rippe 42 und der zweiten Flanke 72 der Vertiefung 70 kann beispielsweise auch dann von Vorteil sein, wenn die Verstellvorrichtung 10, beispielsweise zu Reparaturzwecken, aus der Führungsbüchse 20 herausgezogen werden muss.

Es versteht sich, dass die Formen der Stirnbereiche 40 der Innenrippen 42 und die Formen des Verlaufes dieser Innenrippen 42 entlang dem Rohrstück 21, welche vorstehend offenbart sind, in einer Stütze je nach Bedarf unter- bzw. miteinander kombiniert werden können.

Die vorliegende Stütze weist unter anderem den Vorteil auf, dass sie sich (nach-)bearbeitungsfrei und trotzdem spielfrei herstellen lässt, was unter anderem die Herstellungskosten wesentlich senkt.

## Patentansprüche

1. Stütze, insbesondere für Stühle, Tische und dgl., mit einer Vorrichtung (10) zur Verstellung der Länge der Stütze und mit einer Büchse (20) zur Führung der Verstellvorrichtung (10), wobei diese Büchse (20) in einem Führungsrohr (1) eingesetzt ist, dadurch gekennzeichnet, dass die Führungsbüchse (20) so ausgeführt ist, dass die Verstellvorrichtung (10) auch bei grossen seitlichen Belastungen in der Führungsbüchse (20) wackelfrei sitzt.

2. Stütze nach Patentanspruch 1, dadurch gekennzeichnet, dass die Führungsbüchse (20) von der freien bzw. oberen Mündung (19) des Führungsrohres (1) her in dieses eingesetzt ist, dass die Führungsbüchse (20) einen rohrstückförmigen Grundkörper bzw. ein Rohrstück (21) aufweist, dessen Längsachse auf der Hauptachse A der Stütze liegt, dass von der Aussenfläche (23) des Rohrstückes (21) Aussenrippen (22) abstehen, welche sich bis zur Innenfläche (24) des Führungsrohres (1) erstrecken, und dass von der Innenseite (43) des Rohrstückes (21) Innenrippen (42) abstehen, welche sich von der Innenseite (43) des Rohrstückes (21) gegen die Hauptachse A der Stütze hin erstrecken.

3. Stütze nach Patentanspruch 2, dadurch gekennzeichnet, dass die Innenrippen (42) sich entlang dem Rohrstück (21) in der Axialrichtung erstrecken und dass sie parallel oder schräg zur Hauptachse A der Stütze verlaufen.

4. Stütze nach Patentanspruch 2, dadurch gekennzeichnet, dass die Innenrippe (42) einen Grundkörper (41) aufweist, der einen im wesentlichen viereckförmigen Querschnitt hat, und dass der der Versteilvorrichtung (10) zugewandte Stirnbereich (40) der Innenrippe (42) zur wackelfreien Aufnahme der Verstellvorrichtung (10) ausgebildet ist.

5. Stütze nach Patentanspruch 4, dadurch gekennzeichnet, dass der Stirnbereich (40) eine gekrümmte Stirnfläche (39) aufweist, deren Krümmungsradius dem Krümmungsradius der Aussenwand (14) der Verstellvorrichtung (10) entspricht, und dass der Stirnbereich (40) ferner zumindest eine Lippe (50,57;60) umfasst.

6. Stütze nach Patentanspruch 5, dadurch gekennzeichnet, dass der Grundkörper (41) der Innenrippe (42) Eckpartien aufweist, von welchen eine sich jeweils dort befindet, wo sich der Stirnbereich (40) der Innenrippe (42) mit der jeweiligen Seitenflä-che (48;49) des Grundkörpers (41) der Innenrippe (42) trifft, dass zumindest von einer dieser Eckpartien des Rippengrundkörpers (41) die Lippe (50,57) absteht, dass die Lippe (50,57;60) sich in Axialrichtung entlang dem Grundkörper (41) der Innenrippe (42) erstreckt, dass sie in der Umfangsrichtung hinsichtlich des Rohrstückes (21) praktisch bzw. beinahe tangential verläuft und dass die Lippe (50,57) im wesentlichen bogenförmig ist.

7. Stütze nach Patentanspruch 5, dadurch gekennzeichnet, dass zumindest eine Rille (55;56) im Stirnbereich (40) der Innenrippe (42) ausgeführt ist und dass diese Rille (55) sich zwischen der Stirnfläche (39) der Innenrippe (42) und dem Ansatz der Lippe (50,57) an dieser Innenlippe (42) befindet.

8. Stütze nach Patentanspruch 5, dadurch gekennzeichnet, dass eine Vertiefung (58) im Stirnbereich (40) der Innenrippe (42) ausgeführt ist, dass eine Lippe (60) sich in dieser Vertiefung (58) befindet und dass eine Kante (61) dieser Lippe (60) aus der Vertiefung (58) in radialer Richtung herausragt.

9. Stütze nach Patentanspruch 5, dadurch gekennzeichnet, dass die Innenrippe (42) als eine seitlich biegsame Rippe ausgeführt ist, und dass in jenem Gebiet der Innenfläche (43) des Rohrstückes (21), in welchem die freie Endpartie (68) der Rippe (42) auf die Innenfläche (24) zur Auflage kommen kann, eine Vertiefung (70) zur Aufnahme dieser Endpartie bzw. dieses Kammes (68) der Innenrippe (42) ausgeführt ist.

10. Stütze nach Patentanspruch 1, dadurch gekennzeichnet, dass im oberen Bereich der Führungsbüchse (20) ein Ringbund (30) vorhanden ist, dass in diesem Ringbund (30) zumindest eine Bohrung (37) ausgeführt ist, deren Längsachse parallel zur Hauptachse A der Stütze verläuft, und dass zumindest ein Anschlagpuffer (75) vorgesehen ist, welcher in der Bohrung (37) so eingesetzt ist, dass der Kopf (76) des Puffers (75) von der Oberseite des Ringbundes (30) absteht.
